(19) **Europäisches Patentamt / European Patent Office / Office européen des brevets**

(11) **EP 4 618 048 B1**

(12) **FASCICULE DE BREVET EUROPEEN**

(45) Date de publication et mention de la délivrance du brevet:
**01.07.2026 Bulletin 2026/27**

(21) Numéro de dépôt: **25160373.4**

(22) Date de dépôt: **26.02.2025**

(51) Classification Internationale des Brevets (IPC):
**G06V 40/13** *(2022.01)* **G06V 40/12** *(2022.01)*

(52) Classification Coopérative des Brevets (CPC):
**G06V 40/13**

(54) **PROCÉDÉ DE TRAITEMENT D'UNE IMAGE ACQUISE PAR UN CAPTEUR D'EMPREINTES DIGITALES, POUR DISCRIMINER DES DOIGTS ET DES TRACES**

VERFAHREN ZUR VERARBEITUNG EINES VON EINEM FINGERABDRUCKSENSOR ERFASSTEN BILDES ZUR UNTERSCHEIDUNG VON FINGERN UND SPUREN

METHOD FOR PROCESSING AN IMAGE ACQUIRED BY A FINGERPRINT SENSOR TO DISCRIMINATE FINGERS AND TRACES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **12.03.2024 FR 2402465**

(43) Date de publication de la demande:
**17.09.2025 Bulletin 2025/38**

(73) Titulaire: **IDEMIA Public Security France 92400 Courbevoie (FR)**

(72) Inventeurs:
- **BEZOT, Grégoire 92400 COURBEVOIE (FR)**
- **DUMONT, Denis 92400 COURBEVOIE (FR)**
- **FOURNIER, Olivier 92400 COURBEVOIE (FR)**

(74) Mandataire: **IPS 2, place Samuel de Champlain 92400 Courbevoie (FR)**

(56) Documents cités:
**CA-A1- 2 960 247 US-A1- 2023 130 790**

EP 4 618 048 B1

## Description

### DOMAINE TECHNIQUE

La présente invention concerne un procédé de traitement d'une image acquise par un capteur d'empreintes digitales.

### ETAT DE LA TECHNIQUE

Certains capteurs utilisés pour acquérir des images d'empreinte digitale sont sensibles aux paramètres suivants : type de peau de la personne (peau claire, peau sombre), humidité des doigts de la personne, conditions d'éclairage de la peau (lumière ambiante et/ou lumière interne du capteur utilisé). En conséquence, les empreintes obtenues dans une image acquise par de tels capteurs ont une grande variabilité.

Par ailleurs, un doigt posé sur une surface en vue du capteur peut laisser une trace, après que ce doigt n'est plus en vue du capteur. Cette trace est susceptible de présenter des crêtes et des vallées au même titre qu'un dermatoglyphe. En conséquence, une image acquise par un capteur peut montrer un doigt en vue du capteur, mais également des traces qui ne correspondent pas à un doigt en vue du capteur.

De telles traces sont sujettes également à des variabilités, et peuvent être difficile à distinguer des véritables empreintes de doigts en vue.

Le document CA2960247A1 (SAFRAN IDENTITY & SECURITY) divulgue un procédé de traitement d'une image comprenant un ensemble de pixels, chaque pixel étant associé à un niveau de gris, le procédé comprenant une étape de segmentation de l'image pour générer une image modifiée ne contenant que des régions de l'image présentant une alternance de zones claires et de zones sombres à une fréquence supérieure à une fréquence minimale, ladite étape de segmentation comprenant : l'attribution, à chaque pixel de l'image, d'un niveau de réponse fréquentielle, correspondant à une fréquence d'alternances de zones claires et de zones sombres au voisinage du pixel; la définition de régions de l'image par regroupement de pixels voisins de même niveau de réponse fréquentielle; la détermination d'un niveau de réponse fréquentielle seuil; et la génération d'une image ne comprenant que des régions dont les pixels présentent un niveau de réponse fréquentielle supérieur ou égal au niveau de réponse fréquentielle seuil.

Le document US2023/130790A1 (PALLERLA RAKESH ET AL) divulgue une méthode qui peut inclure l'obtention d'une empreinte latente sur une surface, le stockage de cette empreinte latente, l'obtention d'une empreinte en direct sur la surface, et l'authentification de l'empreinte en direct basée en partie sur l'empreinte latente stockée et en partie sur des données d'empreintes précédemment authentifiées. La méthode peut inclure le rejet de l'authentification de l'empreinte en direct comme potentiel contrefaçon, si l'empreinte en direct correspond à l'empreinte latente sous un test de corrélation relativement strict. La méthode peut également inclure, lorsque l'empreinte en direct ne correspond pas étroitement à l'empreinte latente, l'octroi de l'authentification de l'empreinte en direct si elle correspond aux données d'empreintes précédemment authentifiées sous un test de corrélation relativement souple.

### RESUME

Un but de l'invention est de réaliser une discrimination plus précise, dans une image acquise par un capteur d'empreinte digitales, entre doigts en vue du capteur et d'autres traces.

Il est à cet effet proposé, selon un premier aspect, un procédé de traitement d'une image acquise par un capteur d'empreintes digitales, le procédé comprenant les étapes suivantes mises en œuvre pour au moins un pixel de l'image :

- déterminer une valeur de crête associée au pixel et une valeur de vallée associée au pixel, dans lequel la valeur de crête est une valeur de pixel maximale de l'image dans un voisinage prédéfini du pixel, et la valeur de vallée étant une valeur de pixel minimale de l'image dans un voisinage prédéfini du pixel ;
- calculer une dynamique normalisée associée au pixel comme un rapport entre un écart entre la valeur de crête associée au pixel et la valeur de vallée associée au pixel, et une valeur de référence étant une combinaison linéaire de la valeur de crête R associée au pixel et de la valeur de vallée V associé au pixel ;

- comparer la dynamique normalisée associée au pixel et un seuil de dynamique ; et
- générer un résultat associé au pixel, le résultat associé au pixel indiquant que le pixel montre un doigt en vue du capteur d'empreintes digitales seulement si la dynamique normalisée est supérieure au seuil de dynamique.

Le procédé selon le premier aspect peut également comprendre les caractéristiques optionnelles suivantes, prises seules ou en combinaison à chaque fois que cela fait sens techniquement.

De préférence, la valeur de référence est proportionnelle à la valeur de crête associée au pixel ou proportionnelle à la valeur de vallée associée au pixel.

De préférence, le procédé selon le premier aspect comprend en outre :

- comparer la valeur de crête associée au pixel ou la valeur de vallée associée au pixel avec un seuil de valeur,
- dans lequel le résultat associé au pixel indique que le pixel montre une empreinte digitale seulement si les conditions suivantes sont réunies :
- la dynamique normalisée est supérieure au seuil de dynamique, et
- la valeur de crête ou la valeur de vallée est supérieure au seuil de valeur.

De préférence, le procédé selon le premier aspect comprend en outre :

- identifier une zone d'intérêt de l'image montrant un objet candidat susceptible d'être une empreinte digitale,
- répéter les étapes de détermination, de calcul, de comparaison et de génération d'un résultat pour chaque pixel de la zone d'intérêt, de sorte à générer un masque comprenant une pluralité de résultats respectivement associés aux pixels de la zone d'intérêt,
- génération d'un résultat consolidé associé à la zone d'intérêt à partir du masque, dans lequel le résultat consolidé indique que l'objet candidat est une empreinte digitale seulement si la pluralité de résultats respectivement associés aux pixels de la zone d'intérêt comprend une majorité de résultats indiquant des pixels montrant un doigt en vue du capteur d'empreintes digitales.

De préférence, le procédé selon le premier aspect comprend en outre :

- répéter les étapes de détermination, de calcul, de comparaison et de génération d'un résultat pour différents pixels de l'image, de sorte à générer un masque comprenant une pluralité de résultats respectivement associés aux différents pixels,
- dans le masque, identification d'un groupe de résultats respectivement associés à des pixels adjacents de l'image, le groupe de résultats indiquant que les pixels adjacents qui lui sont associés montrent tous un doigt en vue du capteur d'empreintes digitales,
- à condition que le groupe de résultats ait un nombre de résultats inférieur à un nombre prédéfini, ajustement dans le masque du groupe de résultats de sorte à indiquer qu'aucun des pixels adjacents ne montre un doigt en vue du capteur d'empreintes digitales.

De préférence, le procédé selon le premier aspect comprend en outre :

- répéter les étapes de détermination, de calcul, de comparaison et de génération d'un résultat pour différents pixels de l'image, de sorte à générer un masque comprenant une pluralité de résultats respectivement associés aux différents pixels,
- dans le masque, identification d'un groupe de résultats respectivement associés à des pixels adjacents de l'image, le groupe de résultats indiquant que les pixels adjacents qui lui sont associés montrent tous un doigt en vue du capteur d'empreintes digitales ;
- à condition que le groupe de résultats ait un nombre de résultats supérieur à un nombre prédéfini, identification, dans le masque, de résultats complémentaires respectivement associés à des pixels complémentaires de l'image formant avec les pixels adjacents une zone de l'image de forme prédéfinie, par exemple ovoïde ;
- ajustement dans le masque de sorte que les résultats complémentaires indiquent que les pixels complémentaires montrent un doigt en vue du capteur d'empreintes digitales.

De préférence, le capteur d'empreinte digitales est un capteur avec contact, de préférence contact en vue directe.

Un deuxième aspect de la présente divulgation est un produit programme d'ordinateur comprenant des instructions de code de programme pour l'exécution des étapes du procédé selon le premier aspect, lorsque ce programme est exécuté par un module de traitement d'image.

Un troisième aspect de la présente divulgation est une mémoire lisible par un module de traitement d'image stockant des instructions exécutables par un module de traitement d'image pour l'exécution des étapes du procédé selon le premier aspect.

Un quatrième aspect de la présente divulgation est un dispositif comprenant un capteur d'empreintes digitales et un module de traitement d'image configuré pour traiter une image acquise par le capteur d'empreintes digitales, conformément au procédé selon le premier aspect.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 illustre de façon schématique un dispositif selon un mode de réalisation de l'invention.

La figure 2 est un organigramme d'étapes d'un procédé de traitement d'image selon un mode de réalisation de l'invention.

La figure 3 est un organigramme détaillant les sous-étapes d'une étape du procédé de la figure 2, selon un mode de réalisation.

La figure 4 représente schématiquement une image impliquée dans la mise en œuvre du procédé de la figure 2.

La figure 5 représente schématiquement un masque de détection généré au cours de la mise en œuvre du procédé de la figure 2.

Sur l'ensemble des figures, les éléments similaires portent des références identiques.

## DESCRIPTION DETAILLEE DE L'INVENTION

### Dispositif

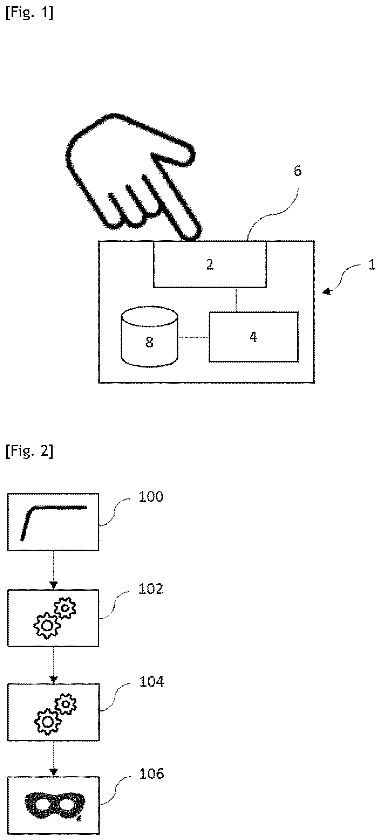

En référence à la **figure 1,** un dispositif 1 comprend un capteur d'empreintes digitales 2 et un module de traitement d'images 4.

Le capteur d'empreintes digitales 2, plus simplement appelé capteur 2 dans la suite, a pour fonction de générer une image montrant une empreinte digitale du doigt d'un utilisateur du dispositif 1, lorsque l'utilisateur place ce doigt dans une zone d'acquisition prédéfinie en vue du capteur 2. Le capteur 2 génère l'image à partir de la lumière qu'il reçoit. Une partie de cette lumière a été renvoyée par les crêtes de l'empreinte digitale, et une autre partie de la lumière qu'il reçoit a été renvoyée par les vallées de l'empreinte digitale.

Le capteur 2 est par exemple un capteur 2 avec contact, ce qui suppose que le dispositif 1 comprend une surface d'acquisition 6 sur laquelle le doigt est censé être posé, lorsque le capteur 2 acquiert une image.

En particulier, le capteur 2 peut être un capteur 2 à contact en vue directe, par exemple de type TFT (acronyme anglais de Thin Film Transistor), avec substrat en verre, ou de type CMOS (acronyme anglais de Complementary metaloxyd silicon), avec substrat en silicium. Alternativement, le capteur 2 peut être un capteur fonctionnant sur le principe de la réflexion totale (en anglais : « frustrated total internal reflection », abrégé en FTIR).

Le module de traitement d'images 4, plus simplement appelé module 4 dans la suite, a pour fonction de traiter une image acquise par le capteur 2.

Le module 4 est par exemple un composant physique dédié, tel qu'un circuit, par exemple un circuit programmable (FPGA) ou un circuit non programmable (ASIC). En variante, le dispositif 1 comprend un processeur, et le module 4 est un composant logiciel, autrement dit un programme d'ordinateur comprenant des instructions de code destinées à être exécuté par le processeur. Le processeur peut comprendre un ou plusieurs cœurs (pour exécuter des tâches simultanément).

Le dispositif 1 comprend par ailleurs une mémoire 8 propre à stocker le programme, des images acquises par le capteur 2, ou des données produites par le module 4. La mémoire comprend typiquement une mémoire non-volatile dans laquelle le programme est stocké, et une mémoire volatile dans laquelle le programme peut être chargé et pour stocker temporairement des données calculées par le module 4.

### Procédé de traitement d'image

On va à présent détailler dans la suite un procédé mis en œuvre par le module de traitement d'images 4 en référence à la **figure 2.**

Dans une étape préliminaire, une image a été acquise par le capteur 2, puis transmise au module de traitement d'images 4.

L'image acquise par le capteur 2 est susceptible de comprendre un ou plusieurs motifs présentant des crêtes et des vallées. Dans ce qui suit, on distingue deux types de motifs :

- des motifs montrant des dermatoglyphes de doigts qui étaient en vue du capteur 2 lorsque l'image a été acquise, et qu'on appellera conventionnellement « empreintes digitales » ;
- des motifs à vallées et à crêtes ne se rapportant pas à des doigts en vue du capteur 2 lorsque l'image a été acquise. Par convention, ces motifs seront appelés « traces » dans la suite, pour différencier ces motifs des empreintes digitales. Typiquement, de telles traces peuvent avoir été laissées sur une surface du dispositif 1 par un doigt. Dans ce cas, il existe sur la surface un dépôt de matière (par exemple graisseuse), qui provient d'un doigt, mais ce doigt n'est plus en vue du capteur 2 : c'est cette matière déposée qui est vue par le capteur 2, et qui pourrait être confondue avec une véritable empreinte digitale, et ce en dépit du fait qu'il n'y a pas de doigt en vue du capteur 2.

Dans une étape de prétraitement 100, le module 4 identifie dans l'image au moins une zone d'intérêt, chaque zone d'intérêt montrant un motif candidat présentant des crêtes et des vallées. A ce stade, on parle de motif « candidat », car le module 4 ne sait pas encore si un motif à crêtes et à vallées est une empreinte digitale (donc se rapportant à un doigt en vue du capteur 2) ou une trace (ne se rapportant pas à un doigt en vue du capteur 2).

Cette identification peut typiquement être réalisée par une segmentation de l'image sur un critère de fréquence spatiales ou un critère de niveau. Au cours de cette segmentation, au moins une zone de l'image à basse fréquence est considérée comme un fond de l'image ne constituant pas une zone d'intérêt, et au moins une zone de l'image à haute fréquence est considérée comme une zone d'intérêt. En effet, un motif à crêtes et à vallées est un motif à hautes fréquences spatiales.

Dans une étape 102, le module génère un masque de détection d'empreintes digitales associé à l'image.

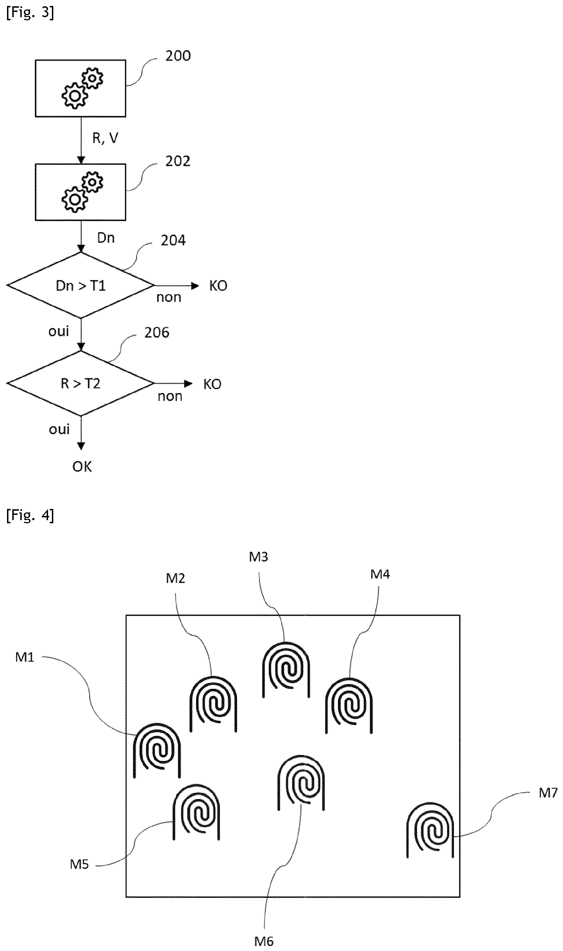

En référence à la **figure 3,** l'étape 102 comprend les sous-étapes suivantes appliquées à un pixel de l'image acquise par le capteur 2, ce pixel se trouvant dans une zone d'intérêt identifiée à l'étape de prétraitement 100.

Dans une étape 200, le module 4 détermine une valeur de crête R associée au pixel et une valeur de vallée V associée au pixel.

La valeur de crête R est une valeur de pixel maximale de l'image dans un premier voisinage prédéfini du pixel. Le pixel de valeur maximal est le pixel qui a reçu le plus de lumière parmi les pixels du premier voisinage. La valeur de crête R est indicative d'une quantité de lumière reçue par le capteur 2 en le pixel, après avoir été renvoyée par des crêtes montrées dans l'image.

Par ailleurs, la valeur de vallée V associée au pixel, la valeur de vallée V étant une valeur de pixel minimale de l'image dans un deuxième voisinage prédéfini du pixel. Le pixel de valeur minimale est le pixel qui a reçu le moins de lumière parmi les pixels du deuxième voisinage. La valeur de vallée V est indicative d'une quantité de lumière reçue par le capteur 2 en ce pixel, après avoir été renvoyée par des vallées montrées dans l'image.

Le premier voisinage ou le deuxième voisinage est typiquement un ensemble de pixels connexes formant un rectangle ou un carré, par exemple centré sur le pixel considéré. De préférence, le premier voisinage ou le deuxième voisinage présente une hauteur ou une largeur en nombre de pixels correspondant à trois fois la distance inter-crêtes moyenne d'un doigt humain adulte. Cette dimension est ajustée en tenant compte de la résolution du capteur 2.

Le premier voisinage et le deuxième voisinage peuvent être identiques ou différents.

Dans une étape 202, le module 4 calcule une dynamique normalisée Dn associée au pixel comme un rapport entre :

- une dynamique D associée au pixel, constituant un écart entre la valeur de crête R associée au pixel et la valeur de vallée V associée au pixel, et
- une valeur de référence associée au pixel, la valeur de référence associée au pixel étant une combinaison linéaire de la valeur de crête R associée au pixel et de la valeur de vallée V associé au pixel.

La dynamique normalisée Dn associée au pixel présente ainsi la forme générale suivante :

$$Dn = \frac{D}{\alpha R + \beta V} = \frac{R - V}{\alpha R + \beta V}$$

Il est à noter que la valeur de référence associée au pixel peut être proportionnelle à la valeur de vallée V associé au pixel ou à la valeur de crête R associée au pixel. Dans ce cas, l'un des poids $\alpha$ ou $\beta$ est nul.

Dans des modes de réalisation particuliers, la valeur de référence associée au pixel est la valeur de vallée V associé au pixel ou est la valeur de crête R associée au pixel (ce qui implique que l'un des deux poids $\alpha$ ou $\beta$ est nul, tandis que l'autre poids est égal à 1).

Dans une étape 204, le module 4 compare la dynamique normalisée avec un seuil de dynamique prédéfini T1 (le seuil de dynamique prédéfini T1 est préalablement stocké dans la mémoire 8).

Le module 4 génère ensuite un résultat associé au pixel, susceptible de prendre deux valeurs :

- une première valeur OK (également appelée « résultat positif » dans la suite) indiquant que le pixel montre un doigt en vue du capteur 2 (autrement dit, il est considéré par le module 4 que le motif candidat de la zone d'intérêt incluant le pixel est une empreinte digitale) ; ou
- une deuxième valeur KO (également appelée « résultat négatif » dans la suite) indiquant que le pixel ne montre pas un doigt en vue du capteur 2 (autrement dit, il est considéré par le module 4 que le motif candidat de la zone d'intérêt incluant le pixel est une simple trace sur une surface du dispositif en vue du capteur 2).

Le résultat associé au pixel peut ainsi être un booléen. Par exemple, OK=1 et KO=0.

La valeur prise par le résultat dépend de la comparaison de l'étape 204. De manière générale, le résultat généré par le module 4 est positif seulement si Dn > T1. Ainsi, cette condition Dn > T1 est nécessaire pour que le résultat soit positif (OK). Si cette condition n'est pas remplie, le résultat généré par le module 4 est négatif.

Dans un mode de réalisation simple de mise en œuvre, cette condition est suffisante : ainsi, le module 4 se fonde uniquement sur cette condition pour générer un résultat positif.

Dans un mode de réalisation particulièrement avantageux, cette condition se fondant sur la dynamique normalisée Dn n'est pas suffisante : une condition supplémentaire doit être remplie pour que le résultat positif soit généré, cette condition supplémentaire se fondant sur la valeur de crête R ou la valeur de vallée V associée au pixel.

Ainsi, dans une étape optionnelle 206, le module 4 peut comparer la valeur de crête R avec un seuil de crête et/ou comparer la valeur de vallée V avec un seuil de vallée. Le résultat positif OK peut ensuite être généré seulement si les deux conditions suivantes sont réunies : Dn > T1 et R > T2. Si ces deux conditions ne sont pas réunies, le module 4 génère le résultat négatif KO.

On verra dans la suite que le test complémentaire améliore la fiabilité des résultats générés par le module 4 (réduction de taux de fausses alarmes et de détections de doigt manquées).

Les étapes 200 à 206 sont répétées pour chaque pixel de l'image inclus dans une zone d'intérêt. De préférence, ces étapes ne sont pas appliquées aux autres pixels de l'image.

Les étapes 204 et 206 peuvent être réalisées dans n'importe quel ordre.

En conséquence de cette répétition, le module 4 obtient une pluralité de résultats respectivement associés aux pixels de l'image se trouvant dans la ou les zones d'intérêt de l'image. Cette pluralité de résultats constitue le masque de détection d'empreintes digitales dans l'image, résultant de l'étape 102. Ce masque fournit des informations pixel par pixel, qui sont en soit avantageuses et qui permettent au masque d'être exploité dans un traitement ultérieur d'authentification ou d'identification d'un individu dont le doigt a été imagé.

De retour à la figure 2, le module met en œuvre l'étape de consolidation 104 du masque de détection, de sorte à obtenir un masque consolidé. L'étape de consolidation 104 peut comprendre les sous-étapes suivantes.

Le module 4 identifie dans le masque un groupe de résultats positifs respectivement associés à des pixels adjacents de l'image. En réalité, le module 4 peut dans cette sous-étape répartir tous les résultats positifs obtenus en un ou plusieurs groupes de pixels adjacents. Ensuite, le module 4 compare le nombre de résultats positifs d'un groupe donné avec un premier nombre prédéfini.

Si le nombre de résultats positifs du groupe est inférieur au premier nombre prédéfini, alors le module 4 ajuste le masque de sorte que les résultats du groupe deviennent négatifs dans le masque consolidé. Sinon (c'est-à-dire si le nombre de résultats du groupe n'est pas inférieur au premier nombre prédéfini), alors cet ajustement n'est pas mis en œuvre.

Ce premier ajustement du masque permet d'éliminer dans le masque consolidé des zones d'intérêt trop petites pour être exploitables dans des applications ultérieures telle qu'une authentification ou une identification, et constituant donc du bruit. En particulier, peuvent être éliminés par cet ajustement des traces de poussière sur le capteur 2.

Par ailleurs, le module 4 compare le nombre de résultats d'un groupe donné avec un deuxième nombre prédéfini. Si le nombre de résultats du groupe est supérieur au deuxième nombre prédéfini, le module 4 identifie dans le masque des résultats complémentaires respectivement associés à des pixels complémentaires de l'image, ces pixels complémentaires formant avec les pixels adjacents du groupe considéré une zone de l'image ayant une forme prédéfinie. Ensuite, le module 4 ajuste le masque de sorte que les résultats complémentaires soient positifs dans le masque consolidé. Ceci implique que tout résultat complémentaire qui était négatif dans le masque devient positif dans le masque consolidé.

Ce deuxième ajustement permet de « récupérer » une empreinte digitale dont seule une partie des pixels aura été identifiée dans le masque de départ.

De préférence cette forme prédéfinie est une forme ovoïde. Cette forme est avantageuse, car c'est une forme qui approxime correctement la forme d'une empreinte digitale classique.

Un troisième ajustement susceptible d'être réalisé lors de l'étape 104 consiste à attribuer à une zone d'intérêt ayant été déterminée à l'étape 100 un résultat global positif OK seulement si les pixels de la zone d'intérêt sont en majorité associés à des résultats respectifs positifs OK. Ainsi, en cas d'une telle majorité, les résultats négatifs KO dans la zone d'intérêt considéré deviennent des résultats positifs.

L'un des trois ajustements proposés ci-dessus peut être sélectivement mis en œuvre lors de l'étape 104 de consolidation, et peuvent être combinés. En cas de combinaison, le deuxième nombre prédéfini sera supérieur ou égal au premier nombre prédéfini.

Bien entendu, chaque ajustement peut être appliqué à chaque groupe de résultats identifié ou à chaque zone d'intérêt identifiée.

Le masque consolidé résulte ainsi de chaque ajustement opéré sur le masque de détection que le module 4 avait obtenu à l'issue de l'étape 102.

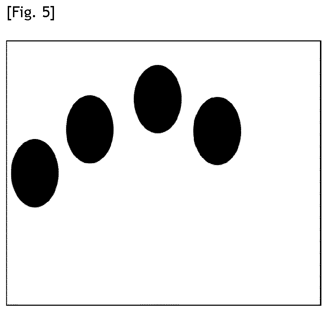

A titre d'exemple, on a représenté schématiquement sur la **figure 4** une image acquise par le capteur 2. Cette image comprend sept zones d'intérêt montrant sept motifs candidats respectifs M1 à M7 : des empreintes digitales M1, M2, M3 et M4 et des traces M5, M6 et M7. La **figure 5** est une représentation d'un masque consolidé obtenu à l'issue de l'étape 104, appliquée à l'image de la figure 4. Les parties blanches de ce masque sont celles ayant un résultat KO, et les parties noires sont celle ayant un résultat OK. On constate que les trois traces M5, M6 et M7 ont été éliminées, et que les quatre groupes de pixels formant les parties noires sont de forme ovoïde.

Dans une étape 106 de masquage, le module applique le masque consolidé à l'image, de sorte à obtenir une image de sortie. Cette application consiste par exemple à conserver dans l'image de sortie tout pixel associé à un résultat OK, et faire en sorte que tous les autres pixels de l'image aient des valeurs positionnées à une valeur constante (pixels hors zones d'intérêt et pixels associés à des résultats KO dans le masque consolidé). Cette valeur constante est par exemple une valeur extrémale (blanc ou noir).

L'image de sortie peut ensuite être utilisée dans une étape d'authentification ou d'identification biométrique à partir de l'image, connue de l'homme du métier.

**Avantages et résultats comparatifs**

Un avantage procuré par l'utilisation de la dynamique normalisée Dn comme critère pour décider si un pixel montre véritablement un doigt en vue du capteur 2 (et non une trace), est que cette donnée Dn est peu ou pas dépendante de la quantité de lumière qui est reçue par un doigt imagé par le capteur 2.

Pour le comprendre, partons du principe que la valeur de crête R et que la valeur de vallée V associées à un pixel donné sont proportionnelles à la quantité de lumière reçue par un doigt (cette lumière cumulant la lumière émanant d'une source d'illumination interne du dispositif 1, et une lumière environnante provenant de l'extérieur du dispositif 1), ce qui est vrai pour tout capteur 2 avec élément de conversion de photon en électron qui a une réponse linéaire, qu'il soit à réflexion totale ou en vue directe. On peut alors supposer qu'il existe des paramètres k1 et k2 tels que :

$$R = k1.L$$

$$V = k2.L$$

En injectant ces termes dans la formule donnant la dynamique normalisée, on a :

$$Dn = \frac{R-V}{\alpha R + \beta V} = \frac{k1L - k2L}{\alpha k1L + \beta k2L} = \frac{k1 - k2}{\alpha k1 + \beta k2}$$

On voit bien que le terme Dn ne dépend plus de L.

En définitive, la dynamique normalisée Dn est un critère qui varie selon les peaux (paramètres k1 et k2) mais qui ne varie en théorie pas avec la lumière du doigt L. k1 caractérise plutôt la capacité du doigt à renvoyer de la lumière, soit en gros sa couleur, et k2 la capacité du doigt à bien coupler avec la surface du capteur 2 (doigt sec ou humide). C'est la raison pour laquelle la discrimination doigt / trace réalisée par le module 4 à l'aide de la dynamique normalisée Dn est beaucoup plus performante qu'une discrimination doigt / trace qui se fonderait sur la dynamique D (non normalisée, et dépendante de L).

Le tableau ci-dessous illustre ce gain de performances, dans une application du procédé décrit précédemment à un dispositif comprenant un capteur en vue directe.

[Table 1]

| Cas | Motif | Véritable doigt ? | R | D | Dn |
|---|---|---|---|---|---|
| 1 | Trace sous doigts sombre | Non | 40 | 24.5 | 0.613 |
| 2 | Doigt sombre #1 | Oui | 75 | 27.5 | 0.367 |
| 3 | Doigt nominal | Oui | 180 | 60 | 0.333 |

(suite)

| Cas | Motif | Véritable doigt ? | R | D | Dn |
|---|---|---|---|---|---|
| 4 | Doigt très sombre #2 | Oui | 70 | 20 | 0.286 |
| 5 | Doigt très sombre #3 | Oui | 60 | 13 | 0.217 |
| 6 | Trace éclairée par une lumière émanant d'une source interne au dispositif 1 (pièce plus clair) | Non | 35 | 6 | 0.171 |
| 7 | Doigt sec mais lumineux | Oui | 180 | 30 | 0.167 |
| 8 | Doigt extrêmement sombre (Vrai doigt avec marqueur noir dessus) | Oui | 50 | 8 | 0.160 |
| 9 | Doigt SEC et sombre #4 | Oui | 70 | 10 | 0.143 |
| 10 | Trace + lumière émanant de la source interne fond plus lumineux | Non | 73 | 7 | 0.096 |
| 11 | Trace forte et lumineuse | Non | 200 | 17 | 0.085 |
| 12 | Trace éclairée par la lumière émanant de la source interne (pièce sombre) | Non | 63 | 5 | 0.079 |
| 13 | Trace éclairée par l'extérieur | Non | 240 | 16 | 0.067 |
| 14 | Trace sans lumière émanant d'une source interne au dispositif 1 | Non | 160 | 5 | 0.031 |

La première colonne liste différents motifs candidats apparaissant dans des images acquises par un capteur 2, et indique des éventuelles conditions particulières dans lesquelles ces images ont été acquises.

On constate que la dynamique D (quatrième colonne) varie fortement, en tout cas beaucoup plus que la dynamique normalisée Dn (cinquième colonne). En effet, en choisissant ici T1=0.1, on ne commet que deux erreurs de discrimination entre doigt et trace (dans les cas 1 et 6).

Cette dynamique D se combine particulièrement bien avec la valeur de crête R dans un mode de réalisation à deux conditions dans lequel il faut avoir Dn > T1 et R > T2 pour générer un résultat positif. En effet, en choisissant ici T1=0.1 et T2=80, on arrive à ne plus commettre aucune erreur de discrimination entre doigt et trace.

**Autres modes de réalisation**

Dans le mode de réalisation représenté en figure 3, le test complémentaire réalisé à l'étape 206 fait intervenir la valeur de crête R. Dans d'autres modes de réalisation, il peut être prévu de générer le résultat position OK pour un pixel, lorsque :

- Dn > T1 et V > T3 (2 conditions à réunir), ou
- Dn > T1 et R > T2 et V > T3 (3 conditions à réunir).

Dans un autre mode de réalisation, l'étape 206 n'est pas mise en œuvre.

On rappelle également que les étapes 100 et 104, bien qu'avantageuses, restent optionnelles. Il est en particulier possible de répéter les étapes de la figure 3 pour chaque pixel de l'image.

Le procédé trouve avantageusement application avec des capteurs en vue directe, mais n'est pas limité à cette application.

**Revendications**

1. Procédé de traitement d'une image acquise par un capteur d'empreintes digitales, le procédé comprenant les étapes suivantes mises en œuvre pour au moins un pixel de l'image :

    • déterminer (200) une valeur de crête (R) associée au pixel et une valeur de vallée (V) associée au pixel, dans lequel :

• la valeur de crête (R) est une valeur de pixel maximale de l'image dans un voisinage prédéfini du pixel ;
• la valeur de vallée (V) étant une valeur de pixel minimale de l'image dans un voisinage prédéfini du pixel ;

• calculer (202) une dynamique normalisée (Dn) associée au pixel comme un rapport entre :

    • un écart entre la valeur de crête (R) associée au pixel et la valeur de vallée (V) associée au pixel, et
    • une valeur de référence étant une combinaison linéaire de la valeur de crête (R) associée au pixel et de la valeur de vallée (V) associé au pixel ;

• comparer (204) la dynamique normalisée (Dn) associée au pixel et un seuil de dynamique (T1) ;
• générer un résultat associé au pixel, le résultat associé au pixel indiquant que le pixel montre un doigt en vue du capteur d'empreintes digitales seulement si la dynamique normalisée (Dn) est supérieure au seuil de dynamique (T1).

2. Procédé selon la revendication précédente, dans lequel la valeur de référence est proportionnelle à la valeur de crête (R) associée au pixel ou proportionnelle à la valeur de vallée (V) associée au pixel.

3. Procédé selon l'une quelconque des revendications précédentes, comprenant en outre :

• comparer (206) la valeur de crête (R) associée au pixel ou la valeur de vallée (V) associée au pixel avec un seuil de valeur (T2),
• dans lequel le résultat associé au pixel indique que le pixel montre une empreinte digitale seulement si les conditions suivantes sont réunies :

    • la dynamique normalisée (Dn) est supérieure au seuil de dynamique (T1), et
    • la valeur de crête (R) ou la valeur de vallée (V) est supérieure au seuil de valeur (T2).

4. Procédé selon l'une quelconque des revendications précédentes, comprenant :

• identifier une zone d'intérêt de l'image montrant un objet candidat susceptible d'être une empreinte digitale,
• répéter les étapes de détermination (200), de calcul (202), de comparaison (204) et de génération d'un résultat pour chaque pixel de la zone d'intérêt, de sorte à générer un masque comprenant une pluralité de résultats respectivement associés aux pixels de la zone d'intérêt,
• génération d'un résultat consolidé associé à la zone d'intérêt à partir du masque, dans lequel le résultat consolidé indique que l'objet candidat est une empreinte digitale seulement si la pluralité de résultats respectivement associés aux pixels de la zone d'intérêt comprend une majorité de résultats indiquant des pixels montrant un doigt en vue du capteur d'empreintes digitales.

5. Procédé selon l'une quelconque des revendications précédentes,

• répéter les étapes de détermination, de calcul, de comparaison et de génération d'un résultat pour différents pixels de l'image, de sorte à générer un masque comprenant une pluralité de résultats respectivement associés aux différents pixels,
• dans le masque, identification d'un groupe de résultats respectivement associés à des pixels adjacents de l'image, le groupe de résultats indiquant que les pixels adjacents qui lui sont associés montrent tous un doigt en vue du capteur d'empreintes digitales,
• à condition que le groupe de résultats ait un nombre de résultats inférieur à un nombre prédéfini, ajustement dans le masque du groupe de résultats de sorte à indiquer qu'aucun des pixels adjacents ne montre un doigt en vue du capteur d'empreintes digitales.

6. Procédé selon l'une quelconque des revendications précédentes, comprenant :

• répéter les étapes de détermination, de calcul, de comparaison et de génération d'un résultat pour différents pixels de l'image, de sorte à générer un masque comprenant une pluralité de résultats respectivement associés aux différents pixels,
• dans le masque, identification d'un groupe de résultats respectivement associés à des pixels adjacents de l'image, le groupe de résultats indiquant que les pixels adjacents qui lui sont associés montrent tous un doigt en vue du capteur d'empreintes digitales ;

• à condition que le groupe de résultats ait un nombre de résultats supérieur à un nombre prédéfini, identification, dans le masque, de résultats complémentaires respectivement associés à des pixels complémentaires de l'image formant avec les pixels adjacents une zone de l'image de forme prédéfinie, par exemple ovoïde ;
• ajustement dans le masque de sorte que les résultats complémentaires indiquent que les pixels complémentaires montrent un doigt en vue du capteur d'empreintes digitales.

7. Procédé selon l'une quelconque des revendications précédentes, dans lequel le capteur d'empreinte digitales est un capteur avec contact, de préférence avec contact en vue directe.

8. Produit programme d'ordinateur comprenant des instructions de code de programme pour l'exécution des étapes du procédé selon l'une quelconque des revendications précédentes, lorsque ce programme est exécuté par un module de traitement d'image (4).

9. Mémoire (8) lisible par un module de traitement d'image stockant des instructions exécutables par un module de traitement d'image (4) pour l'exécution des étapes du procédé selon l'une des revendications 1 à 7.

10. Dispositif (1) comprenant :

• un capteur d'empreintes digitales (2),
• un module de traitement d'image (4) configuré pour traiter une image acquise par le capteur d'empreintes digitales (2), conformément au procédé selon l'une quelconque des revendications 1 à 7.

**Patentansprüche**

1. Verfahren zur Verarbeitung eines von einem Fingerabdrucksensor erfassten Bildes, wobei das Verfahren die folgenden Schritte umfasst, die für mindestens ein Pixel des Bildes

• durchgeführt werden: • Bestimmen (200) eines dem Pixel zugeordneten Spitzenwerts (R) und eines dem Pixel zugeordneten Talwerts (V), wobei:

• der Spitzenwert (R) ein maximaler Pixelwert des Bildes in einer vordefinierten Nachbarschaft des Pixels ist; der Talwert (V) ein minimaler Pixelwert des Bildes in einer vordefinierten Nachbarschaft des Pixels ist;

• Berechnen (202) einer dem Pixel zugeordneten normalisierten Dynamik (Dn) als Verhältnis zwischen:

• einer Abweichung zwischen dem dem Pixel zugeordneten Spitzenwert (R) und dem dem Pixel zugeordneten Talwert (V) und
• einem Referenzwert, der eine lineare Kombination aus dem dem Pixel

• zugeordneten Spitzenwert (R) und dem dem Pixel zugeordneten Talwert (V) ist;

• Vergleichen (204) der dem Pixel zugeordneten normierten Dynamik (Dn) mit einem Dynamikschwellenwert (T1);
• Erzeugen eines dem Pixel zugeordneten Ergebnisses, wobei das dem Pixel zugeordnete Ergebnis nur dann anzeigt, dass das Pixel einen Finger in Sichtweite des Fingerabdrucksensors aufweist, wenn die normalisierte Dynamik (Dn) größer ist als der Dynamikschwellenwert (T1).

2. Verfahren nach dem vorstehenden Anspruch, wobei der Referenzwert proportional zum dem Pixel zugeordneten Spitzenwert (R) oder proportional zum dem Pixel zugeordneten Talwert (V) ist.

3. Verfahren nach einem der vorstehenden Ansprüche, das ferner umfasst:

♦ Vergleichen (206) des dem Pixel zugeordneten Spitzenwerts (R) oder des dem Pixel zugeordneten Talwerts (V) mit einem Schwellenwert (T2),
♦ wobei das dem Pixel zugeordnete Ergebnis angibt, dass das Pixel einen Fingerabdruck aufweist, nur wenn die folgenden Bedingungen erfüllt sind:

• die normierte Dynamik (Dn) größer als der Dynamikschwellenwert (T1) ist und
•• der Spitzenwert (R) oder der Talwert (V) größer ist als der Schwellenwert (T2).

4. Verfahren nach einem der vorstehenden Ansprüche, umfassend:

• Identifizieren eines interessierenden Bereichs des Bildes, der ein Objekt zeigt, das ein Fingerabdruck sein könnte,
• Wiederholen der Schritte des Bestimmens (200), des Berechnens (202), des Vergleichens (204) und des Erzeugens eines Ergebnisses für jedes Pixel des interessierenden Bereichs, um eine Maske zu erzeugen, die eine Vielzahl von Ergebnissen umfasst, die jeweils den Pixeln des interessierenden Bereichs zugeordnet sind,
• Erzeugen eines konsolidierten Ergebnisses, das dem interessierenden Bereich zugeordnet ist, aus der Maske, wobei das konsolidierte Ergebnis nur dann anzeigt, dass das Kandidatenobjekt ein Fingerabdruck ist, wenn die Vielzahl von Ergebnissen, die jeweils den Pixeln des interessierenden Bereichs zugeordnet sind, eine Mehrheit von Ergebnissen umfasst, die auf Pixel hinweisen, die einen Finger in Sichtweite des Fingerabdrucksensors zeigen.

5. Verfahren nach einem der vorstehenden Ansprüche,

• Wiederholen der Schritte des Bestimmens, Berechnens, Vergleichens und Erzeugens eines Ergebnisses für verschiedene Pixel des Bildes, um eine Maske zu erzeugen, die eine Vielzahl von Ergebnisseh umfasst, die jeweils den verschiedenen Pixeln zugeordnet sind,
• in der Maske Identifizierung einer Gruppe von Ergebnissen, die jeweils benachbarten Pixeln des Bildes zugeordnet sind, wobei die Gruppe von Ergebnissen anzeigt, dass die ihr zugeordneten benachbarten Pixel alle einen Finger in Sichtweite des Fingerabdrucksensors zeigen,
• vorausgesetzt, dass die Gruppe von Ergebnissen eine Anzahl von Ergebnissen aufweist, die kleiner ist als eine vordefinierte Anzahl, Anpassen der Gruppe von Ergebnissen in der Maske, um anzuzeigen, dass keines der benachbarten Pixel einen Finger in Sichtweite des Fingerabdrucksensors aufweist.

6. Verfahren nach einem der vorstehenden Ansprüche, umfassend:

• Wiederholen der Schritte des Bestimmens, Berechnens, Vergleichens und Erzeugens eines Ergebnisses für verschiedene Pixel des Bildes, um eine Maske zu erzeugen,
• die eine Vielzahl von Ergebnissen umfasst, die jeweils den verschiedenen Pixeln zugeordnet sind,
• in der Maske Identifizierung einer Gruppe von Ergebnissen, die jeweils benachbarten Pixeln des Bildes zugeordnet sind, wobei die Gruppe von Ergebnissen anzeigt, dass die ihr zugeordneten benachbarten Pixel alle einen Finger in Sichtweite des Fingerabdrucksensors zeigen;
vorausgesetzt, dass die Gruppe von Ergebnissen eine Anzahl von Ergebnissen aufweist, die größer ist als eine vordefinierte Zahl, Identifizierung weiterer Ergebnisse in der Maske

• die jeweils mit weiteren Pixeln des Bildes assoziiert sind, die zusammen mit den benachbarten Pixeln einen Bildbereich mit vordefinierter Form, beispielsweise eiförmig, bilden;

• Anpassung in der Maske, sodass die ergänzenden Ergebnisse anzeigen, dass die ergänzenden Pixel einen Finger in Sichtweite des Fingerabdrucksensors zeigen.

7. Verfahren nach einem der vorstehenden Ansprüche, wobei der Fingerabdrucksensor ein Kontaktsensor ist, vorzugsweise ein Sensor mit direktem Kontakt.

8. Computerprogrammprodukt, das Programmcodeanweisungen zur Ausführung der Verfahrensschritte gemäß einem der vorstehenden Ansprüche umfasst, wenn dieses Programm von einem Bildverarbeitungsmodul (4) ausgeführt wird.

9. Von einem Bildverarbeitungsmodul lesbarer Speicher (8), der von einem Bildverarbeitungsmodul (4) ausführbare Befehle zur Durchführung der Verfahrensschritte gemäß einem der Ansprüche 1 bis 7 speichert.

10. Vorrichtung (1), umfassend:

• einen Fingerabdrucksensor (2),

• ein Bildverarbeitungsmodul (4), das so konfiguriert ist, dass es ein vom Fingerabdrucksensor (2) erfasstes Bild gemäß dem Verfahren nach einem der Ansprüche 1 bis 7 verarbeitet.

**Claims**

1.  A method for processing an image acquired by a fingerprint sensor, the method comprising the following steps performed for at least one pixel of the image:

    • determining (200) a peak value (R) associated with the pixel and a valley value (V) associated with the pixel, wherein:
    • the peak value (R) is a maximum pixel value of the image within a predefined neighborhood of the pixel;
    • the valley value (V) is a minimum pixel value of the image within a predefined neighborhood of the pixel;
    • calculating (202) a normalized dynamic range (Dn) associated with the pixel as a ratio between:
    • a difference between the peak value (R) associated with the pixel and the valley value (V) associated with the pixel, and
    • a reference value being a linear combination of the peak value (R) associated with the pixel and the valley value (V) associated with the pixel:
    • comparing (204) the normalized dynamic range (Dn) associated with the pixel and a dynamic range threshold (T1);
    • generating a result associated with the pixel, wherein the result associated with the pixel indicates that the pixel shows a finger in view of the fingerprint sensor only if the normalized dynamic range (Dn) is greater than the dynamic threshold (T1).

2.  A method according to the preceding claim, wherein the reference value is proportional to the peak value (R) associated with the pixel or proportional to the valley value (V) associated with the pixel.

3.  A method according to any one of the preceding claims, further comprising:

    • comparing (206) the peak value (R) associated with the pixel or the valley value (V) associated with the pixel with a threshold value (T2),
    • wherein the result associated with the pixel indicates that the pixel exhibits a fingerprint only if the following conditions are met:
    • the normalized dynamic range (Dn) is greater than the dynamic range threshold (T1), and
    • the peak value (R) or the valley value (V) is greater than the value threshold (T2).

4.  A method according to any of the preceding claims, comprising:

    • identifying an area of interest in the image showing a candidate object that may be a fingerprint,
    • repeating the steps of determining (200), calculating (202), comparing (204), and generating a result for each pixel of the region of interest, so as to generate a mask comprising a plurality of results respectively associated with the pixels of the region of interest,
    • generating a consolidated result associated with the region of interest from the mask, wherein the consolidated result indicates that the candidate object is a fingerprint only if the plurality of results respectively associated with the pixels of the region of interest comprises a majority of results indicating pixels showing a finger in view of the fingerprint sensor.

5.  A method according to any of the preceding claims,

    • repeating the steps of determining, calculating, comparing, and generating a result for different pixels of the image, so as to generate a mask comprising a plurality of results respectively associated with the different pixels,
    • within the mask, identifying a group of results respectively associated with adjacent pixels of the image, the group of results indicating that the adjacent pixels associated with it all show a finger in view of the fingerprint sensor,
    • provided that the group of results has a number of results less than a predefined number, adjusting the group of results in the mask so as to indicate that none of the adjacent pixels shows a finger in view of the fingerprint sensor.

6.  A method according to any of the preceding claims, comprising:

• repeating the steps of determining, calculating, comparing, and generating a result for different pixels of the image, so as to generate a mask comprising a plurality of results respectively associated with the different pixels,

• in the mask, identifying a group of results respectively associated with adjacent pixels of the image, the group of results indicating that the adjacent pixels associated with it all show a finger in view of the fingerprint sensor;
• provided that the group of results has a number of results greater than a predefined number, identifying, in the mask, additional results

respectively associated with complementary pixels of the image, forming with the adjacent pixels an area of the image having a predefined shape, for example ovoid;

• adjustment in the mask such that the complementary results indicate that the complementary pixels show a finger as viewed by the fingerprint sensor.

7. A method according to any of the preceding claims, wherein the fingerprint sensor is a contact sensor, preferably a direct-contact sensor.

8. A computer program product comprising program code instructions for performing the steps of the method according to any of the preceding claims, when said program is executed by an image processing module (4).

9. A memory (8) readable by an image processing module, storing instructions executable by an image processing module (4) for performing the steps of the method according to any one of claims 1 to 7.

10. A device (1) comprising:
a fingerprint sensor (2),

• an image processing module (4) configured to process an image acquired by the fingerprint sensor (2), in accordance with the method according to any one of claims 1 to 7.

[Fig. 1]

[Fig. 2]

[Fig. 3]

[Fig. 4]

[Fig. 5]

**RÉFÉRENCES CITÉES DANS LA DESCRIPTION**

**Documents brevets cités dans la description**

- CA 2960247 A1

- US 2023130790 A1, PALLERLA RAKESH